(19) Europäisches Patentamt
European Patent Office
Office européen des brevets

(11) **EP 2 871 173 B1**

(12) **EUROPEAN PATENT SPECIFICATION**

(45) Date of publication and mention
of the grant of the patent:
**04.09.2019 Bulletin 2019/36**

(21) Application number: **13813331.9**

(22) Date of filing: **08.07.2013**

(51) Int Cl.:
**C04B 41/90** (2006.01)      **C04B 41/00** (2006.01)
**C04B 41/52** (2006.01)      **C23C 4/02** (2006.01)
**C23C 4/08** (2016.01)      **C21D 1/06** (2006.01)
**C21D 1/18** (2006.01)      **C23C 28/00** (2006.01)
**C23C 4/134** (2016.01)      C21D 9/38 (2006.01)
C22C 19/05 (2006.01)      C22C 27/06 (2006.01)
C21D 1/08 (2006.01)

(86) International application number:
**PCT/JP2013/069079**

(87) International publication number:
**WO 2014/007406 (09.01.2014 Gazette 2014/02)**

(54) **CARBON MATERIAL HAVING THERMAL SPRAYED COATING LAYER**

KOHLENSTOFFMATERIAL MIT THERMISCH GESPRITZTER OBERFLÄCHENSCHICHT

MATÉRIAU DE CARBONE COMPORTANT UNE COUCHE DE REVÊTEMENT OBTENUE PAR PROJECTION THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.07.2012 JP 2012152980**

(43) Date of publication of application:
**13.05.2015 Bulletin 2015/20**

(73) Proprietor: **Toyo Tanso Co., Ltd.**
**Osaka-shi**
**Osaka 555-0011 (JP)**

(72) Inventors:
• **TAKABATAKE, Takeshi**
  **Akashi-shi**
  **Hyogo 674-0093 (JP)**
• **OHIDE, Yuhei**
  **Akashi-shi**
  **Hyogo 674-0093 (JP)**
• **ORISHIMA, Tsuyoshi**
  **Osaka-shi**
  **Osaka 5550011 (JP)**
• **IZUMIYA, Masaki**
  **Mitoyo-shi**
  **Kagawa 769-1102 (JP)**
• **TADA, Yoshitomi**
  **Mitoyo-shi, Kagawa, 7690401 (JP)**

(74) Representative: **Glawe, Delfs, Moll**
**Partnerschaft mbB von**
**Patent- und Rechtsanwälten**
**Postfach 13 03 91**
**20103 Hamburg (DE)**

(56) References cited:
**EP-A2- 1 277 850      EP-A2- 1 428 904**
**JP-A- H08 218 115      JP-A- H09 287 614**
**JP-A- 2000 045 037      US-A- 5 560 993**
**US-A1- 2006 280 952**

## Description

TECHNICAL FIELD

The present invention relates to a carbon material having on its surface a thermal spray coating layer that is excellent in adhesion performance, corrosion resistance, and oxidative consumption resistance, the carbon material being suitable for use in, for example, various types of rolls made of sintered carbon, metal and glass melting crucibles, reaction chambers, various types of batteries and electrolysis electrodes, structural members for flying objects, and heating elements.

BACKGROUND ART

Conventionally, as a technique for compensating the low oxidative consumption resistance and the low surface hardness of carbon material, a number of disclosures have been made about a coated carbon material in which a coating layer with a high hardness or a coating layer for preventing the carbon material from contacting with oxygen is provided on the surface of the carbon material.

For example, Patent Literature 1 discloses a method of manufacturing a carbon-silicon carbide composite material characterized as follows. A carbon base material having an average pore radius of 0.5 µm or greater is processed into a product shape. only a predetermined portion of the obtained raw material is coated with a slurry in which metallic Si powder is mixed and suspended in a resin or a solvent solution thereof. The coated material is then dried, cured, and further sintered at 1500°C or higher.

However, the carbon-silicon carbide composite material disclosed in Patent Literature 1 does not have sufficient oxidative consumption resistance when the material is exposed to an air atmosphere at 600°C. In other words, when used in harsh environments, it is difficult to inhibit oxidative consumption of the carbon material used as the base material.

Patent Literature 2 discloses a carbon member having a metal thermal spray coating layer produced as follows. A carbon substrate surface is treated in advance with a blasting process. A thermal spray coating layer of at least one meal selected from the group of Cr, Ti, V, W, Mo, Zr, Nb, and Ta, or an alloy thereof, whose ratio of linear expansion coefficient to carbon is 0.73 to 1.44 and which has a large chemical affinity to carbon at its interface, is formed on the treated substrate surface. The obtained carbon member has a metal thermal spray coating layer with excellent adhesion performance.

CITATION LIST

Patent Literature

[Patent Literature 1] JP H08(1996)-012474 A
[Patent Literature 2] JP H05(1993)-070268 A

SUMMARY OF INVENTION

TECHNICAL PROBLEM

In the carbon member having a metal thermal spray coating layer disclosed in Patent Literature 2, the metal thermal spray coating layer is directly formed on the surface of the carbon substrate. Consequently, it is difficult to obtain high adhesion performance between the substrate and the metal thermal spray coating layer.

The present invention has been accomplished in view of the foregoing circumstances, and it is an object of the invention to provide a carbon material having a thermal spray coating layer that has excellent adhesion performance between the carbonaceous substrate and the thermal spray coating layer.

SOLUTION TO PROBLEM

In order to accomplish the foregoing object, the present invention provides a carbon material having a thermal spray coating layer, characterized by comprising: a carbonaceous substrate; a silicon carbide-containing carbide layer formed on a surface of the carbonaceous substrate and having an arithmetical mean surface roughness Ra of 1 µm or greater and a Vickers hardness HV of 50 or greater, at least a portion of the silicon carbide-containing carbide layer permeating the carbonaceous substrate, and the silicon carbide-containing carbide layer including a portion in which a permeation depth of the permeating portion is 50 μm or greater; and a thermal spray coating layer formed on the silicon carbide-containing carbide layer, wherein: the thermal spray coating layer comprises a substance capable of forming a silicide with silicon in the silicon carbide-containing carbide layer; and the silicide is formed from the substance and the silicon at the time of thermal spraying in forming the thermal spray coating layer and/or at the time of a heat treatment after the thermal spraying.

ADVANTAGEOUS EFFECTS OF INVENTION

According to the present invention, the silicon carbide-containing carbide layer can firmly adhere to the carbonaceous substrate, and the thermal spray coating layer and the silicon carbide-containing carbide layer can firmly adhere to each other. Therefore, the adhesion performance between the carbonaceous substrate and the thermal spray coating layer can be remarkably improved.

BRIEF DESCRIPTION OF DRAWINGS

    Fig. 1 is a cross-sectional view illustrating a carbon material of Example 1 in a First Example Group.
    Fig. 2 is a cross-sectional view illustrating a carbon material of Examples 2 to 5 in the First Example Group.
    Fig. 3 is a graph showing the changes of heating weight loss in a carbon material A2 and a carbon material Z10.
    Fig. 4 is a cross-sectional image of the carbon material A2 that has been subjected to an oxidation resistance test.
    Fig. 5 is a cross-sectional SEM image of a carbon material C2.
    Fig. 6 is a cross-sectional SEM image of a carbon material C3.
    Fig. 7 is a cross-sectional SEM image of a carbon material D1.
    Fig. 8 is a cross-sectional SEM image of a carbon material D2.
    Fig. 9 is a cross-sectional SEM image of a carbon material D3.

DESCRIPTION OF EMBODIMENTS

The present invention provides a carbon material having a thermal spray coating layer, comprising: a carbonaceous substrate; a silicon carbide-containing carbide layer formed on a surface of the carbonaceous substrate and having an arithmetical mean surface roughness Ra of 1 μm or greater and a Vickers hardness HV of 50 or greater, at least a portion of the silicon carbide-containing carbide layer permeating the carbonaceous substrate, and the silicon carbide-containing carbide layer including a portion in which a permeation depth of the permeating portion is 50 μm or greater; and a thermal spray coating layer formed on a surface of the silicon carbide-containing carbide layer, wherein: the thermal spray coating layer comprises a substance capable of forming a silicide with silicon in the silicon carbide-containing carbide layer; and the silicide is formed from the substance and the silicon at the time of thermal spraying in forming the thermal spray coating layer and/or at the time of a heat treatment after the thermal spraying.
The just-described configuration makes it possible to obtain very strong adhesion between the silicon carbide-containing carbide layer and the carbonaceous substrate, which inherently has high adhesion performance, and moreover, allows the thermal spray coating layer and the silicon carbide-containing carbide layer to firmly adhere to each other. Therefore, the adhesion performance between the carbonaceous substrate and the thermal spray coating layer can be remarkably improved.
Moreover, since the arithmetical mean surface roughness Ra of the silicon carbide-containing carbide layer is restricted to 1 μm or greater, the thermal spray coating layer is reliably adhered to the silicon carbide-containing carbide layer when the thermal spray coating layer is formed. It is more preferable that the arithmetical mean surface roughness Ra be 1 μm or greater, still more preferably from 3 μm to 30 μm (yet more preferably from 5 μm to 15 μm). The upper limit of the arithmetical mean surface roughness Ra is restricted because if the arithmetical mean surface roughness Ra becomes too great, there is a possibility that the film thickness of the thermal spray coating layer becomes non-uniform, causing deterioration in the function in the portion with a small thickness. The arithmetical mean surface roughness Ra herein refers to the value determined by the method specified in JIS B061-2001 (according to ISO 4287-1997).
In addition, because the Vickers hardness is restricted to 50 or greater, the surface of the silicon carbide-containing carbide layer is prevented from the degradation resulting from the residual stress or the thermal stress after the thermal spray coating layer has been formed. As a result, high adhesion performance between the two layers can be retained. Taking these matters into consideration, it is preferable that the Vickers hardness HV be 200 or greater, more preferably 1000 or greater. The Vickers hardness herein refers to the value measured by the method according to JIS Z 2244, in which the mean value of 10 points is obtained with a load of 500 g.
Furthermore, at least a portion of the silicon carbide-containing carbide layer permeates the carbonaceous substrate, and the silicon carbide-containing carbide layer has a portion in which the permeation depth of the permeating portion is 50 $\mu$m or greater. Therefore, the adhesion performance between the silicon carbide-containing carbide layer and the carbonaceous substrate can be ensured sufficiently. It is preferable that the minimum permeation depth from the surface of the carbonaceous substrate be from 50 $\mu$m to 10 mm, more preferably from 100 $\mu$m to 6 mm, still more preferably from 1.0 mm to 3 mm. Here, the silicon carbide-containing carbide layer permeates into the carbonaceous substrate through the pores in the surface of the carbonaceous substrate. The minimum permeation depth from the surface of the carbonaceous substrate is determined by observation of the cross section.

Herein, the carbonaceous substrate is not particularly limited as long as the silicon carbide-containing carbide layer can be formed on the surface thereof. Examples include general carbon materials including extruded carbon material, general graphite materials, isotropic graphite materials, and carbon materials containing carbon fibers.

The silicon carbide-containing carbide layer may be formed by a method (which may hereinafter be referred to as a TS method) that includes coating the substrate with a slurry obtained by dispersing a resin such as polyimide and metallic silicon powder in a solvent, and thereafter performing a heat treatment. The silicon carbide-containing carbide layer may also be formed by other appropriate methods such as a CVD method, a CVI method, and a conversion method.

The raw materials that are usable in forming the thermal spray coating layer include metallic materials capable of forming a silicide, such as Cr, Ni, Si, Ti, Zr, Ta, Nb, W, Mo, and Al. It is also possible to use alloy materials containing at least one of these metallic elements, or compounds containing at least one carbide or boride of the just-described metallic elements. The thermal spray coating layer can be formed by various techniques, such as electric wire flame spraying (arc thermal spraying), powder thermal spraying using oxy-acetylene flame as the heat source (flame thermal spraying), atmospheric plasma spraying using argon gas or nitrogen gas as the main component (atmospheric plasma spraying), and thermal spraying using plasma as the heat source in an atmosphere in which the pressure is reduced to 100-200 mbar with argon gas or nitrogen gas after removing the air (reduced-pressure plasma thermal spraying). Among the above-described materials, materials containing chromium are more preferable, such as 80 wt. % Cr-20 wt. % Ni, 50 wt. % Cr-50 wt. % Ni, 20 wt. % Cr-80 wt. % Ni, $Cr_3C_2$-25 wt. % NiCr, 47 wt. % Co-29 wt. % Mo-18 wt. % Cr, and 38 wt. % Co-32 wt. % Ni-21 wt. % Cr-8 wt. % Al- 0.5 wt. % Y. When the film thickness of the thermal spray coating layer is too small, the oxidative consumption resistance becomes insufficient, but when it is too large, cracks may easily occur because of the internal stress or the like. Therefore, a preferable film thickness is from about 10 $\mu$m to about 300 $\mu$m, more preferably, 30 $\mu$m to 300 $\mu$m. The film thickness of the thermal spray coating layer herein is determined by the method specified in JIS H8401. When a thermal spray coating layer that forms no silicide is provided, it is also possible to provide the thermal spray coating layer using a material capable of being thermal sprayed, such as the material, the method, and the like used for forming the later-described top coat layer, as appropriate.

The thermal spray coating layer comprises a substance capable of forming a silicide, and the silicide be formed in thermal spraying (i.e., when forming the thermal spray coating layer).

In the above-described configuration, a silicide is formed at the interface between the thermal spray coating layer and the silicon carbide-containing carbide layer and in the vicinity thereof, by the silicon that is contained in the silicon carbide-containing carbide layer and the substance capable of forming a silicide that is contained in the thermal spray coating layer. Therefore, not only a physical adhesion force, such as an anchoring effect, but also a chemical bonding force is exhibited between the thermal spray coating layer and the silicon carbide-containing carbide layer. As a result, the adhesion performance between the two layers is remarkably improved. Moreover, the silicide forms a dense layered structure, and it can suppress the permeation of oxygen. Therefore, it becomes possible to inhibit oxygen from permeating into the carbonaceous substrate. As a result, the oxidative consumption resistance of the carbon material can also be improved.

It is desirable that the silicide be formed at the time of thermal spraying (i.e., when forming the thermal spray coating layer) because, when the silicide is formed at the time of thermal spraying, it becomes unnecessary to provide an additional step in forming the silicide. As a result, the manufacturing cost of the carbon material having the thermal spray coating layer can be reduced.

In the present invention, a top coat layer may be provided on a surface of the thermal spray coating layer by thermal spraying. For the top coat layer, an appropriate material may be selected according to the use, as long as the material can adhere firmly. In addition to the materials used for the thermal spray coating layer, it is possible to use $ZrSiO_4$, $Y_2O_3$, $Al_2O_3$, $Cr_2O_3$, MgO, and CaO, and double oxides containing these materials. The top coat layer may be formed by the above-mentioned flame thermal spraying, the above-mentioned atmospheric plasma spraying, or the above-mentioned reduced-pressure plasma thermal spraying. A preferable film thickness of the top coat layer is from about 50 $\mu$m to about 1000 $\mu$m, more preferably, from about 100 $\mu$m to about 500 $\mu$m. However, an appropriate film thickness may be set according to the use. The film thickness of the top coat layer herein is determined by the method specified in JIS H8401, as in the case of the thermal spray coating layer.

In the present invention, the silicon carbide-containing carbide layer contains metallic silicon. When forming the thermal spray coating layer, it is easier to form a silicide with metallic silicon than with silicon carbide. For this reason, the silicide can be formed more smoothly when the silicon carbide-containing carbide layer contains metallic silicon. Here, since the silicide is formed at the interface between the thermal spray coating layer and the silicon carbide-containing carbide layer and in the vicinity thereof, it is preferable that the metallic silicon exist on the surface of the silicon carbide-containing carbide layer and in the vicinity thereof in a large amount. More specifically, metallic silicon is contained at 0.01 atom % or more in the surface of the silicon carbide-containing carbide layer and in the vicinity thereof, more preferably, from 0.1 atom % to 15 atom %. When the silicon carbide-containing carbide layer is made to contain metallic silicon using the above-described TS method, the metallic silicon remains easily in the surface of the silicon carbide-containing carbide layer and in the vicinity thereof because the process steps of the slurry coating and the heat treatment have been performed, so the advantage is obtained that the silicide can be easily formed.

Moreover, when the TS method is used, the silicon carbide-containing carbide layer itself is provided with oxidative consumption and high heat resistance. From this viewpoint as well, the TS method is suitable. In addition, when the TS method is used, the silicon carbide-containing carbide layer is provided with high surface hardness. Therefore, it is also possible to obtain the advantage that the silicon carbide-containing carbide layer can be prevented from being destroyed even when the thermal spray coating layer is formed. Furthermore, with the TS method, a resin is contained in the slurry, and this resin reacts with the metallic silicon to generate silicon carbide. The slurry permeates into the open pores in the carbonaceous substrate, turning the carbon surface of the carbonaceous substrate into a silicon carbide and also producing a silicon carbide that originates from the just-described resin. Thus, silicon carbide is filled in the open pores, and the silicon carbide forms part of the silicon carbide-containing carbide layer, whereby the adhesion performance between the carbonaceous substrate and the silicon carbide-containing carbide layer becomes remarkably high. As a result, even when the silicon carbide-containing carbide layer undergoes the thermal shock produced at the time of forming the thermal spray coating layer or a strong stress at the time of cooling after thermal spraying, the risk of peeling of the layers can be remarkably reduced between the carbonaceous substrate and the silicon carbide-containing carbide layer.

A hearth roll according to the present invention is a hearth roll for a heating furnace, on which a metallic material heated in an oxidizing atmosphere travels, characterized in that a roll body portion thereof comprises the above-described carbon material having the thermal spray coating layer. The use conditions for a hearth roll is extremely harsh, because of high temperature, the presence of oxygen, and external force, and it is an application that particularly requires high adhesion performance and high oxidative consumption resistance. However, such requirements can be met sufficiently by using the carbon material having the thermal spray coating layer according to the present invention.

The present invention also provides a carbon material characterized by comprising: a carbonaceous substrate; and a silicon carbide-containing carbide layer and a thermal spray coating layer formed on the carbonaceous substrate in that order from the carbonaceous substrate; and wherein: the thermal spray coating layer comprises a metal or a metal oxide, the metal or the metal oxide being capable of forming a silicide with silicon in the silicon carbide-containing carbide layer; and a metal silicide layer is provided between the silicon carbide-containing carbide layer and the thermal spray coating layer, the metal silicide layer being formed by a reaction of the metal or the metal oxide with the silicon.

EMBODIMENTS

Hereinbelow, the present invention will be described in further detail based on examples thereof. However, the carbon material having a thermal spray coating layer according to the present invention is not limited by the description of the following embodiments and examples.

[First Embodiment]

(Example 1)

A carbonaceous substrate was prepared by processing an isotropic graphite material having a bulk density of 1.91 and an average pore radius of 0.6 $\mu$m (made by Toyo Tanso Co., Ltd, grade: HPG-59) into dimensions of 50 mm $\times$ 50 mm $\times$ 5 mm. Next, a polyamideimide resin (AI-10, made by Ohara & Co., Ltd.) was dissolved in N-methyl-2-pyrrolidone, to prepare a 20% solution. This solution was mixed with silicon powder (made by Wako Pure Chemical Industries, Ltd., particle size 30-50 $\mu$m) to prepare a slurry. At this time, the amount of the silicon powder was controlled so that the amount of the silicon powder became 60 parts by weight with respect to 100 parts by weight of the polyamideimide resin. Next, the resultant slurry was coated on an outer surface portion of the carbonaceous substrate at a thickness of about 3 mm, and thereafter cured at 300°C in a dryer. Furthermore, the temperature was elevated in a vacuum furnace to 1600°C and kept for 30 minutes, and then, the article was cooled and taken out, whereby a silicon carbide-containing carbide layer was formed on the surface of the carbonaceous substrate. The silicon carbide-containing carbide layer had an arithmetical mean surface roughness Ra of 10 $\mu$m and a Vickers hardness HV of 2395. The permeation depth of the permeating portion thereof was 0.5 $\mu$m or greater.

Next, a thermal spray coating layer was formed by thermal spraying metallic chromium onto the surface of the above-described silicon carbide-containing carbide layer by atmospheric plasma spraying, whereby a carbon material was fabricated. The thermal spraying conditions were as follows. The plasma gas was a mixed gas of argon gas and hydrogen gas at a flow rate of 63 L/min, the output power was set at 38 kW, and the material particle size was set at from 5 45 μm to 45 μm. At this point, the thickness of the thermal spray coating layer comprising the metallic chromium was measured and found to be about 50 μm.

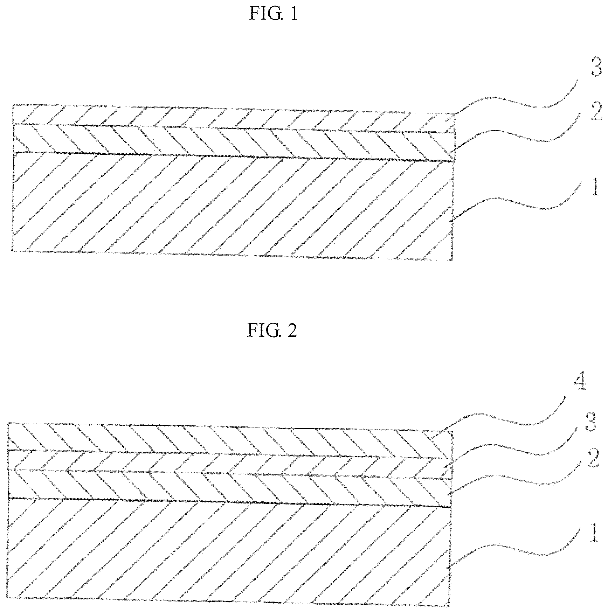

The structure of the above-described carbon material is such that, as illustrated in Fig. 1, a silicon carbide-containing carbide layer 2 and a thermal spray coating layer 3 are formed on a carbonaceous substrate in that order.

The carbon material fabricated in this manner is hereinafter referred to as a carbon material A1.

(Examples 2 to 5)

Carbon materials were fabricated in the same manner as described in Example 1 above, except that a top coat layer 4 comprising zircon (350 μm), yttria-stabilized zirconia (200 μm), mullite (350 μm), or yttria (350 μm), respectively, was formed on the surface of the thermal spray coating layer 3. The top coat layer 4 was formed by thermal spraying each of the materials using atmospheric plasma spraying. The thermal spraying conditions for zircon, mullite, and yttria were as follows. The plasma gas was a mixed gas of argon gas and hydrogen gas at a flow rate of 53 L/min, the output power was set at 40 kW, and the material particle size was set at from 10 μm to 45 μm. The thermal spraying conditions for yttria-stabilized zirconia were as follows. The plasma gas was a mixed gas of argon gas and hydrogen gas at a flow rate of 50 L/min, the output power was set at 44 kW, and the material particle size was set at from 10 μm to 45 μm.

The carbon materials fabricated in these manners are hereinafter referred to as carbon materials A2 to A5, respectively.

(Comparative Examples 1 to 5)

Carbon materials were fabricated in the same manners as described in Examples 1 through 5 above, respectively, except that no silicon carbide-containing carbide layer was formed (i.e., the thermal spray coating layer was formed directly on the surface of the carbonaceous substrate).

The carbon materials fabricated in these manners are hereinafter referred to as carbon materials Z1 to Z5, respectively.

(Comparative Examples 6 to 9)

Carbon materials were fabricated in the same manners as described in Examples 2 through 5 above, respectively, except that neither the silicon carbide-containing carbide layer nor the thermal spray coating layer was formed (i.e., the top coat layer was formed directly on the surface of the carbonaceous substrate).

The carbon materials fabricated in these manners are hereinafter referred to as carbon materials Z6 to Z9, respectively.

(Comparative Example 10)

A carbon material was fabricated in the same manner as described in Example 1 above, except that neither the thermal spray coating layer nor the top coat layer was formed.

The carbon material fabricated in this manner is hereinafter referred to as a carbon material Z10.

(Experiment)

Test specimens were prepared in the manners described for the above-described carbon materials A1 through A5 and the above-described carbon materials Z1 through Z10. In each of the test specimens, the carbonaceous substrate had a plate shape (50 mm × 50 mm × 5 mm), and one of the sides thereof (one of the 50 mm × 50 mm sides) was thermal sprayed. These test specimens were subjected to a 1000°C heat cycle (the cycle in which the temperature was elevated from room temperature to 1000°C over 30 minutes, thereafter held at 1000°C for 1 hour, and then cooled down to room temperature) 5 times, to observe the peeling condition of the thermal spray coating layer or the top coat layer. Oxidation weight loss was measured as follows. For the coating specifications in which no peeling was observed in the heat cycle, test specimens were prepared. In each of the test specimens, the carbonaceous substrate had a columnar shape (diameter 10 mm × length 100 mm), and the entire outer surface thereof was thermal sprayed. The changes in weight were measured using an electronic balance with an accuracy of 0.1 mg. The results are shown in Table1 below. The peeling of the thermal spray coating layer or the top coat layer was observed by visual observation. The oxidation weight loss was calculated according to the following formula (1).

$$[(\text{Weight of carbon material after the experiment} - \text{Weight of carbon material before the experiment})/\text{Weight of carbon material before the experiment}] \times 100 \, (\%) \quad ... \quad (1)$$

TABLE 1

| Carbon material | Presence of silicon carbide-containing carbide layer | Presence of thermal spray coating layer | Top coat layer | | Test result |
|---|---|---|---|---|---|
| | | | Presence | Type (Film thickness) | |
| A1 | Yes | Yes | No | - | Excellent |
| A2 | | | Yes | Zircon (350 $\mu$m) | Excellent |
| A3 | | | | Yttria-stabilized zirconia (200 $\mu$m) | Excellent |
| A4 | | | | Mullite (350 $\mu$m) | Excellent |
| A5 | | | | Yttria (350 $\mu$m) | Excellent |
| Z1 | No | | No | - | Poor |
| Z2 | | | Yes | Zircon (350 $\mu$m) | Poor |
| Z3 | | | | Yttria-stabilized zirconia (200 $\mu$m) | Very poor |
| Z4 | | | | Mullite (350 $\mu$m) | Poor |
| Z5 | | | | Yttria (350 $\mu$m) | Poor |
| Z6 | | No | | Zircon (350 $\mu$m) | Very poor |
| Z7 | | | | Yttria-stabilized zirconia (200 $\mu$m) | Very poor |
| Z8 | | | | Mullite (350 $\mu$m) | Very poor |
| Z9 | | | | Yttria (350 $\mu$m) | Poor |
| Z10 | Yes | | No | - | (Oxidation loss 0.24%) |

In Table 1:

Very poor: Peeling occurred during thermal spraying

Poor: Peeling occurred within 5 times of 1000°C heat cycle

Excellent: The oxidation weight loss was 0.2% or lower with heating at 1000°C for total of 39 hours

As is clear from Table 1, the carbon materials A1 through A5 of Examples are superior in adhesion performance and oxidative consumption resistance to the carbon materials Z1 through Z9 of Comparative Examples. Thus, it will be understood that it is necessary to form the silicon carbide-containing carbide layer on a surface of the carbonaceous substrate, irrespective of the presence or absence of the top coat layer.

(Experiment 2)

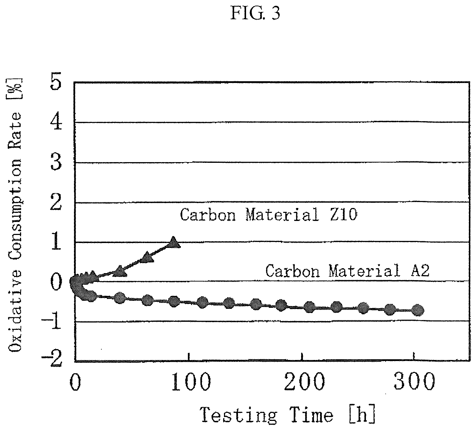

The carbon material A2 and the carbon material Z10 were heated to 1000°C in the air, and the changes in oxidative consumption rate were investigated from the changes in weight. The results are shown in Fig. 3.
As is clear from Fig. 3, the carbon material Z10 showed a high oxidative consumption rate and a considerable decrease in mass. In contrast, the carbon material A2 did not show a decrease in mass but showed a slight increase in mass. It is believed that the slight increase in mass of the carbon material A2 was due to the oxidation of the top coat layer, and almost no oxidation of the carbon material occurred.

(Experiment 3)

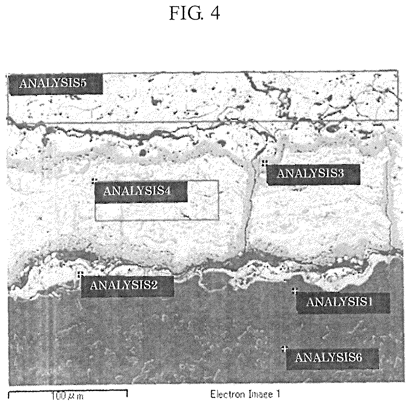

The carbon material A2 was heated at 1000°C for 100 hours and immediately thereafter cooled by placing it into water. After the cooling, the carbon material 2 was subjected to an oxidation resistance test in the air at 1000°C for 200 hours. The cross-sectional image of the sample after the test is shown in Fig. 4, and the results of the elementary analysis after the test are shown in Table 2.

TABLE 2

| Portion | Proportion of elements (%) | | | | | |
|---|---|---|---|---|---|---|
| | C | O | Si | Cr | Zr | Total |
| Analysis 1 | 34.73 | 0.00 | 65.27 | 0.00 | 0.00 | 100.00 |
| Analysis 2 | 11.65 | 0.00 | 22.24 | 66.11 | 0.00 | 100.00 |
| Analysis 3 | 4.54 | 29.46 | 0.00 | 65.99 | 0.00 | 100.00 |
| Analysis 4 | 0.00 | 7.29 | 0.00 | 92.71 | 0.00 | 100.00 |
| Analysis 5 | 10.03 | 30.92 | 12.62 | 0.00 | 46.44 | 100.00 |
| Analysis 6 | 92.35 | 7.65 | 0.00 | 0.00 | 0.00 | 100.00 |

As is clear from Fig. 4 and Table 2, a Cr silicide layer (analysis 2 portion) is formed on the silicon carbide-containing layer formed on the carbonaceous substrate, but because of the extremely harsh test, peeling is observed between the Cr silicide layer and the thermal spray coating layer (analysis 4 portion). Nevertheless, the Cr silicide layer and the silicon carbide-containing layer (analysis 1 portion) are a firmly adhered to each other. In addition, oxidation occurred in a portion of the metallic chromium layer (analysis 3 portion) because of the oxidation resistance test. However, no oxidative consumption was observed in the silicon carbide-containing layer, and no oxygen was detected therein either (analysis 1 portion). It is believed that this adhesion performance between the Cr silicide layer and the silicon carbide-containing layer makes it possible to provide excellent oxidative consumption resistance and excellent adhesion performance.

[Second Embodiment]

(Examples 1 to 7)

Carbon materials were fabricated in the same manner as described in Example 2 in the first embodiment above, except that the compositions of the thermal spray coating layers were as follows: 80 wt. % Cr-20 wt. % Ni, 50 wt. % Cr-50 wt. % Ni, 20 wt. % Cr-80 wt. % Ni, $Cr_3C_2$-25 wt. % NiCr, 47 wt. % Co-29 wt. % Mo-18 wt. % Cr, 38 wt. % Co-32 wt. % Ni-21 wt. % Cr-8 wt. % Al-0.5 wt. % Y, and 95 wt. % Ni-5 wt. % Al, respectively. The film thickness of the thermal spray coating layer was about 50 $\mu$m.

The carbon materials fabricated in these manners are hereinafter referred to as carbon materials B1 to B7, respectively.

(Comparative Example)

A carbon material was fabricated in the same manner as described in Example 2 in the first embodiment above, except that no thermal spray coating layer was formed (i.e., the top coat layer was formed directly on the surface of the silicon carbide-containing carbide layer).

The carbon material fabricated in this manner is hereinafter referred to as a carbon material Y.

(Experiment)

The carbon materials B1 through B7 and the carbon material Y were subjected to a 1000°C heat cycle 5 times in the same manner as described in the experiment in the first embodiment above, to observe the peeling condition of the thermal spray coating layer or the top coat layer. The oxidation weight loss was determined by measuring the weight change after exposure to 1000°C for 39 hours. The results are shown in Table 3 below.

TABLE 3

| Carbon material | Presence of silicon carbide-containing carbide layer | Thermal spray coating layer | | Top coat layer | | Test result |
|---|---|---|---|---|---|---|
| | | Presence | Type | Presence | Type (Film thickness) | |
| B1 | Yes | Yes | 80Cr-20Ni | Yes | Zircon (350 μm) | Excellent |
| B2 | | | 50Cr-50Ni | | | Excellent |
| B3 | | | 20Cr-80Ni | | | Excellent |
| B4 | | | $Cr_3C_2$-25NiCr | | | Excellent |
| B5 | | | Co-Mo-Cr | | | Excellent |
| B6 | | | CoNiCrAlY | | | Excellent |
| B7 | | | Ni-Al | | | Excellent |
| Y | | No | - | | | Good |

In Table 3:

Very poor:    Peeling occurred during thermal spraying.
Good:     No peeling occurred with 1000°C heat cycle, and the oxidation weight loss was 0.2% or greater with heating at 1000°C for total of 39 hours.
Excellent:    The oxidation weight loss was 0.2% or less with heating at 1000°C for total of 39 hours.

As is clear from Table 3, the carbon materials B1 through B7 are superior to the comparative material Y in adhesion performance and oxidative consumption resistance. Thus, it will be understood that good adhesion performance and good oxidative consumption resistance can be obtained even with other materials than metallic chromium by forming the thermal spray coating layer using the materials capable of forming a silicide (such as 80 wt. % Cr-20 wt. % Ni and so forth used for the carbon materials B1 through B7).

[Third Embodiment]

(Example 1)

A carbonaceous substrate was prepared by processing an isotropic graphite material having a bulk density of 1.91 and an average pore radius of 0.6 μm (made by Toyo Tanso Co., Ltd, grade: HPG-59) into dimensions of 35 mm × 35 mm × 20 mm. Next, a polyamideimide resin (AI-10, made by Ohara & Co., Ltd.) was dissolved in N-methyl-2-pyrrolidone, to prepare a 20% solution. This solution was mixed with silicon powder (made by Wako Pure Chemical Industries, Ltd., particle size 30-50 μm) to prepare a slurry. At this time, the amount of the silicon powder was controlled so that the amount of the silicon powder became 60 parts by weight with respect to 100 parts by weight of the polyamideimide resin. Subsequently, the resultant slurry was coated on the 35 mm × 35 mm surface of the above-described carbonaceous substrate so that the thickness was about 1.5 mm and the coating amount was about 4.0 g, and thereafter, the coated slurry was cured at 300°C in a dryer. Furthermore, the temperature was elevated in a vacuum furnace to 1600°C and kept for 30 minutes, and then, the article was cooled and taken out, whereby a silicon carbide-containing carbide layer was formed on the surface of the carbonaceous substrate. The silicon carbide-containing carbide layer had an arithmetical mean surface roughness Ra of 10 μm and a Vickers hardness HV of 1905. The permeation depth of the permeating portion thereof was 0.5 μm or greater.
Next, a thermal spray coating layer was formed by thermal spraying metallic chromium onto the surface of the above-described silicon carbide-containing carbide layer by atmospheric plasma spraying, whereby a carbon material was fabricated. The thermal spraying conditions for metallic chromium were as follows. The plasma gas was a mixed gas of argon gas and hydrogen gas at a flow rate of 63 L/min, the output power was set at 38 kW, and the material particle size was set at from 5 μm to 45 μm. At this point, the thickness of the thermal spray coating layer comprising the metallic chromium was measured and found to be about 50 μm.

Furthermore, a top coat layer was formed on the surface of the thermal spray coating layer by thermal spraying zircon, under the conditions in which the plasma gas was a mixed gas of argon gas and hydrogen gas at a flow rate of 53 L/min, the output power was set at 40 kW, and the material particle size was set at from 10 μm to 45 μm. The thickness of this top coat layer was measured and found to be about 250 μm.

The carbon material fabricated in this manner is referred to as a carbon material C1.

(Example 2)

A carbon material was fabricated in the same manner as described in Example 1 in the third embodiment above, except that the slurry was coated at a thickness of about 0.2 mm in a coating amount of about 0.5 g, the arithmetical mean surface roughness Ra of the silicon carbide-containing carbide layer was set at 10 μm, and the Vickers hardness HV was set at 1850.

The carbon material fabricated in this manner is referred to as a carbon material C2.

(Example 3)

A carbon material was fabricated in the same manner as described in Example 1 in the third embodiment above, except that the slurry was coated at a thickness of about 3.5 mm in a coating amount of about 8.0 g, the arithmetical mean surface roughness Ra of the silicon carbide-containing carbide layer was set at 10 μm, and the Vickers hardness HV was set at 2125.

The carbon material fabricated in this manner is referred to as a carbon material C3.

(Experiment 1)

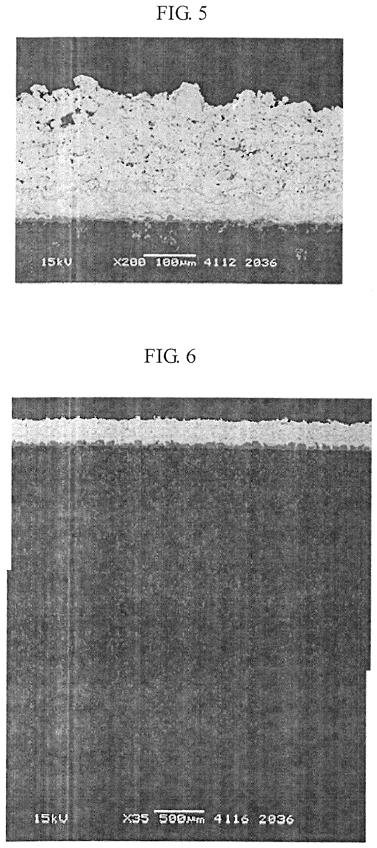

For the above-described carbon materials C1 through C3, the permeation depth of the silicon carbide-containing carbide layer was determined, by visual observation of a cross section for the carbon material C1, and by the cross-sectional SEM images shown in Figs. 5 and 6 for the carbon materials C2 and C3. Figs. 5 and 6 are cross-sectional SEM images of the carbon materials C2 and C3, respectively.

In Figs. 5 and 6, the white layers at the top are the top coat layer and the thermal spray coating layer, respectively, and the grey color portion under the thermal spray coating layer is the silicon carbide-containing carbide layer. The black portion under the silicon carbide-containing carbide layer is the carbonaceous substrate. The silicon carbide-containing carbide layer can be confirmed such that a layer-like portion in grey color is formed on the surface of the carbonaceous substrate and also the grey color portion permeates in the pores of the carbonaceous substrate.

Here, a portion of the silicon carbide-containing carbide layer is formed so as to permeate into the carbonaceous substrate from the surface thereof, so that it enters the open pores existing in the carbonaceous substrate. In the cross-sectional images of Figs. 5 and 6, the grey color portions (silicon carbide portions) appear as if they are closed pores. In reality, however, the grey color portions (silicon carbide portions) that appear to be isolated in the carbonaceous substrate are connected to the silicon carbide-containing carbide layer on the surface. The reason why they appear in this way is that, although the pores in the carbonaceous substrate have bending shapes (indefinite shapes), the photographs can show only one plane.

The permeation depth of the permeating portion of each of the silicon carbide-containing carbide layers was read. From Fig. 5, the permeation depth in the carbon material C2 was found to be 90 μm or greater, and from Fig. 6, the permeation depth in the carbon material C3 was found to be 3 mm or greater. From the visual observation of the cross section, the permeation depth of the carbon material C1 was found to be 1.8 mm or greater.

The carbon materials C1 through C3 were subjected to a test in which the cycle of heating the test specimens from room temperature to 500°C and cooling down was repeated 2 times, and a test in which the cycle of heating the test specimens from room temperature to 1000°C and cooling down 2 times, in order to confirm the adhesion performance of the thermal spray coating layer and the top coat layer. The results are shown in Table 4 below.

TABLE 4

| Carbon material | Silicon carbide-containing carbide layer | | Thermal spray coating layer | | Top coat layer | | Test result |
|---|---|---|---|---|---|---|---|
| | Presence | Permeation in permeated portion ($\mu$m) | Presence | Type | Presence | Type (Film thickness) | |
| C1 | Yes | 1800 or greater | Yes | Cr | Yes | Zircon (250 $\mu$m) | Excellent |
| C2 | | 90 or greater | | | | | Excellent |
| C3 | | 3000 or greater | | | | | Excellent |
| Excellent: No peeling occurred in the thermal spray coating layer or the top coat layer in the tests at 500°C and 1000°C. | | | | | | | |

The test results shown in Table 4 clearly demonstrate that good adhesion performance can be obtained for the thermal spray coating layer and the top coat layer when the permeation depth of the permeating portion in the silicon carbide-containing carbide layer is 50 $\mu$m or greater.

[Fourth Embodiment]

(Example 1)

A flat-shaped C/C composite material (made by Toyo Tanso Co., Ltd, grade: CX-761) processed into dimensions of 35 × 35 × 20 mm was used as a carbon substrate. Next, a polyamideimide resin (AI-10, made by Ohara & Co., Ltd.) was dissolved in N-methyl-2-pyrrolidone, to prepare a 20% solution. This solution was mixed with silicon powder (made by Wako Pure Chemical Industries, Ltd., particle size 30-50 $\mu$m) to prepare a slurry. At this time, the amount of the silicon powder was controlled so that the amount of the silicon powder became 60 parts by weight with respect to 100 parts by weight of the polyamideimide resin. Subsequently, the resultant slurry was coated on the 35 × 35 surface of the above-described carbonaceous substrate so that the thickness was about 1.5 mm and the coating amount was about 4.0 g, and thereafter, the coated slurry was cured at 300°C in a dryer. Furthermore, the temperature was elevated in a vacuum furnace to 1600°C and kept for 30 minutes, and then, the article was cooled and taken out, whereby a silicon carbide-containing carbide layer was formed on the surface of the carbonaceous substrate. The silicon carbide-containing carbide layer had an arithmetical mean surface roughness Ra of 10 $\mu$m and a Vickers hardness HV of 2395. The permeation depth of the permeating portion thereof was about 7 mm or greater.

Next, a thermal spray coating layer was formed by thermal spraying alumina onto the surface of the above-described silicon carbide-containing carbide layer by atmospheric plasma spraying, whereby a carbon material was fabricated. The thermal spraying conditions for alumina were as follows. The plasma gas was a mixed gas of argon gas and hydrogen gas at a flow rate of 53 L/min, the output power was set at 40 kW, and the material particle size was set at from 10 $\mu$m to 45 $\mu$m. The thermal spraying conditions for yttria-stabilized zirconia were as follows. The plasma gas was a mixed gas of argon gas and hydrogen gas at a flow rate of 50 L/min, the output power was set at 44 kW, and the material particle size was set at from 10 $\mu$m to 45 $\mu$m. At this point, the thickness of the thermal spray coating layer comprising the alumina was measured and found to be about 50 $\mu$m.

The structure of the above-described carbon material is such that a silicon carbide-containing carbide layer 2, a thermal spray coating layer 3, and a top coat layer 4 are formed on a carbonaceous substrate 1 in that order, as the one shown in the first embodiment and illustrated in Fig. 2.

The carbon material fabricated in this manner is hereinafter referred to as a carbon material D1.

(Example 2)

A carbon material was fabricated in the same manner as described in Example 1 in the fourth embodiment above, except that the slurry was coated at a thickness of about 0.2 mm in a coating amount of about 0.5 g, the arithmetical mean surface roughness Ra of the silicon carbide-containing carbide layer was set at 10 $\mu$m, and the Vickers hardness HV was set at 1850.

The carbon material fabricated in this manner is referred to as a carbon material D2.

(Example 3)

A carbon material was fabricated in the same manner as described in Example 1 in the fourth embodiment above, except that the slurry was coated at a thickness of about 3.5 mm in a coating amount of about 8.0 g, the arithmetical mean surface roughness Ra of the silicon carbide-containing carbide layer was set at 10 $\mu$m, and the Vickers hardness HV was set at 2125.

The carbon material fabricated in this manner is referred to as a carbon material D3.

(Comparative Example)

A carbon material was fabricated in the same manner as described in Example 1 in the fourth embodiment above, except that no silicon carbide-containing carbide layer was formed and alumina was thermal sprayed directly onto the carbonaceous substrate under the same conditions.

The carbon material fabricated in this manner is referred to as a carbon material X.

(Experiment 1)

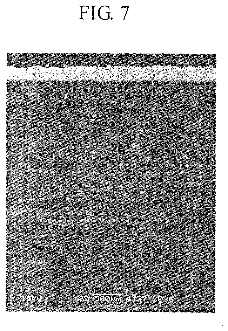

For the above-described carbon materials D1 through D3, the permeation depth of the silicon carbide-containing carbide layer was determined by the cross-sectional SEM images. Figs. 7, 8, and 9 are cross-sectional SEM images of the carbon materials D1, D2, and D3, respectively.

In Figs. 7 through 9, the white layers at the top are the top coat layer and the thermal spray coating layer, respectively, and the grey color portion under the thermal spray coating layer is the silicon carbide-containing carbide layer. The black portion under the silicon carbide-containing carbide layer is the carbonaceous substrate. The silicon carbide-containing carbide layer can be confirmed such that a layer-like portion in grey color is formed on the surface of the carbonaceous substrate and also the grey color portion permeates in the pores of the carbonaceous substrate. In each of the cross-sectional images of Figs. 7 through 9, the grey color portions (silicon carbide portions) appear as if they are closed pores, but as in the third embodiment above, the grey color portions are connected to the silicon carbide-containing carbide layer on the surface.

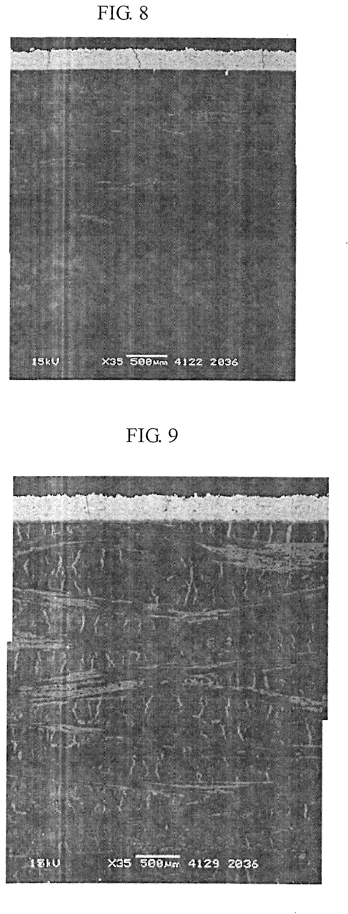

The permeation depth of the permeating portion of each of the silicon carbide-containing carbide layers was read from Figs. 7 through 9. From Fig. 7, the permeation depth in the carbon material D1 was found to be about 7 mm or greater. From Fig. 8, the permeation depth in the carbon material D2 was found to be about 2 mm or greater. From Fig. 9, the permeation depth in the carbon material D3 was found to be about 10 mm or greater (the cross section of the real specimen was visually observed because the entire cross section did not fit in the SEM photograph).

(Experiment 2)

A thermal shock test, in which the carbon materials D1 through D3 and the carbon material X were heated to 600°C and then dropped into water of room temperature, was performed. In the carbon material X, the thermal spray coating layer was peeled off. In contrast, in each of the carbon materials D1 through D3, no peeling was observed in the thermal spray coating layer, and it was confirmed that the thermal spray coating layer was adhered very firmly.

(Experiment 3)

A block of SUS 304 was placed on the thermal spray coating layer of alumina of the carbon material D1, and the article was retained in vacuum (0.05 to 0.10 Torr) at 1300°C for 3 hours. As a result, it was found that no reaction was caused between the carbon material D1 and SUS 304, and it was confirmed that the thermal spray coating layer functioned effectively.

[Fifth Embodiment]

(Example 1)

A carbonaceous substrate was prepared by processing an isotropic graphite material having a bulk density of 1.91 and an average pore radius of 0.6 $\mu$m (made by Toyo Tanso Co., Ltd, grade: HPG-59) into dimensions of 50 mm $\times$ 50 mm $\times$ 5 mm. Next, a polyamideimide resin (AI-10, made by Ohara & Co., Ltd.) was dissolved in N-methyl-2-pyrrolidone, to prepare a 20% solution. This solution was mixed with silicon powder (made by Wako Pure Chemical Industries, Ltd., particle size 30-50 $\mu$m) to prepare a slurry. At this time, the amount of the silicon powder was controlled so that the amount of the silicon powder became 60 parts by weight with respect to 100 parts by weight of the polyamideimide resin. Next, the resultant slurry was coated on an outer surface portion of the carbonaceous substrate at a thickness of about 3 mm, and thereafter cured at 300°C in a dryer. Furthermore, the temperature was elevated in a vacuum furnace to 1600°C and kept for 30 minutes, and then, the article was cooled and taken out, whereby a silicon carbide-containing carbide layer was formed on the surface of the carbonaceous substrate. The surface of this silicon carbide-containing carbide layer was polished so that the arithmetical mean surface roughness Ra was adjusted to 3 μm. This silicon carbide-containing carbide layer had a Vickers hardness HV of 2395. The permeation depth of the permeating portion thereof was 0.5 mm or greater.

Next, a thermal spray coating layer was formed by thermal spraying metallic chromium onto the surface of the above-described silicon carbide-containing carbide layer by atmospheric plasma spraying, whereby a carbon material was fabricated. The thermal spraying conditions for metallic chromium were as follows. The plasma gas was a mixed gas of argon gas and hydrogen gas at a flow rate of 63 L/min, the output power was set at 38 kW, and the material particle size was set at from 5 μm to 45 μm. At this point, the thickness of the thermal spray coating layer comprising the metallic chromium was measured and found to be about 50 μm. Furthermore, a top coat layer was formed on the surface of the thermal spray coating layer by thermal spraying zircon, under the conditions in which the plasma gas was a mixed gas of argon gas and hydrogen gas at a flow rate of 53 L/min, the output power was set at 40 kW, and the material particle size was set at from 10 μm to 45 μm. The thickness of this top coat layer was measured and found to be about 250 μm.

The carbon material fabricated in this manner is referred to as a carbon material E1.

(Example 2)

A thermal spray coating layer and a top coat layer were formed on the surface of the silicon carbide-containing carbide layer in the same manner as described in Example 1, except that the arithmetical mean surface roughness Ra of the silicon carbide-containing carbide layer was adjusted to 9 μm. The carbon material fabricated in this manner is referred to as a carbon material E2.

(Example 3)

A thermal spray coating layer and a top coat layer were formed on the surface of the silicon carbide-containing carbide layer in the same manner as described in Example 1, except that the arithmetical mean surface roughness Ra of the silicon carbide-containing carbide layer was adjusted to 25 μm. The carbon material fabricated in this manner is referred to as a carbon material E3.

(Experiment)

The carbon materials E1 through E3 were subjected to a test in which the cycle of heating the test specimens from room temperature to 500°C and cooling down was repeated 2 times, and a test in which the cycle of heating the test specimens from room temperature to 1000°C and cooling down 2 times, in order to confirm the adhesion performance of the thermal spray coating layer and the top coat layer. The results are shown in Table 5 below.

TABLE 5

| Carbon material | Silicon carbide-containing carbide layer | | Thermal spray coating layer | | Top coat layer | | Test result |
|---|---|---|---|---|---|---|---|
| | Presence | Surface roughness Ra | Presence | Type | Presence | Type (Film thickness) | |
| E1 | Yes | 3 | Yes | Cr | Yes | Zircon (250 μm) | Excellent |
| E2 | | 9 | | | | | Excellent |
| E3 | | 25 | | | | | Excellent |
| Excellent: No peeling occurred in the thermal spray coating layer or the top coat layer in the tests at 500°C and 1000°C. | | | | | | | |

The test results shown in Table 5 demonstrate that good adhesion performance can be obtained for the thermal spray coating layer and the top coat layer when the surface roughness Ra is 3 μm or greater.

INDUSTRIAL APPLICABILITY

The present invention can be used suitably for various types of rolls made of sintered carbon, metal and glass melting crucibles, various types of batteries and electrolysis electrodes, structural members for flying objects, heating elements, and the like.

REFERENCE SIGNS LIST

1 -- Carbonaceous substrate
2 -- Silicon carbide-containing carbide layer
3 -- Thermal spray coating layer
4 -- Top coat layer

**Claims**

1. A carbon material having a thermal spray coating layer, **characterized by** comprising:
   a carbonaceous substrate; and a silicon carbide-containing carbide layer that contains metallic silicon and a thermal spray coating layer, provided on the carbonaceous substrate in that order from the carbonaceous substrate, and wherein:

   the silicon carbide-containing carbide layer has an arithmetical mean surface roughness Ra of 1 $\mu$m or greater and a Vickers hardness HV of 50 or greater, at least a portion of the silicon carbide-containing carbide layer permeating the carbonaceous substrate, and the silicon carbide-containing carbide layer including a portion in which a permeation depth of the permeating portion is 50 $\mu$m or greater; and
   the thermal spray coating layer comprises a substance, the substance being capable of forming a silicide with silicon in the silicon carbide-containing carbide layer; the substance includes metallic materials capable of forming a silicide with silicon in the silicon carbide-containing carbide layer, alloy materials containing at least one of metallic elements of the metallic materials, or compounds containing at least one carbide or boride of the metallic elements; and a metal silicide layer is provided between the silicon carbide-containing carbide layer and the thermal spray coating layer, the metal silicide layer being formed by a reaction of the substance with the silicon

2. The carbon material having a thermal spray coating layer, according to claim 1, further comprising a top coat layer provided on a surface of the thermal spray coating layer, the top coat layer formed by thermal spraying.

3. A hearth roll for a heating furnace, on which a metallic material heated in an oxidizing atmosphere travels, **characterized in that** a roll body portion thereof comprises the carbon material having a thermal spray coating layer according to claim 1 or 2.

4. A method of manufacturing a carbon material having a thermal spray coating layer, **characterized by** comprising the steps of:

   coating a carbonaceous substrate with a solution in which metallic silicon and a resin are dispersed in a solvent;
   causing the solvent in the solution to evaporate;
   forming a silicon carbide-containing carbide layer that contains metallic silicon on the carbonaceous substrate by causing the metallic silicon to react with the carbon in the carbonaceous substrate and the carbon in the resin by a heat treatment; and
   forming a thermal spray coating layer on the silicon carbide-containing carbide layer by thermal spraying a substance capable of forming a silicide, and forming a silicide between the thermal spray coating layer and the silicon carbide-containing carbide layer by the thermal spraying in forming the thermal spray coating layer, the silicide being formed from the substance and the silicon in the silicon carbide-containing carbide layer, wherein the substance includes metallic materials capable of forming a silicide with silicon in the silicon carbide-containing carbide layer, alloy materials containing at least one of metallic elements of the metallic materials, or compounds containing at least one carbide or boride of the metallic elements; and
   the silicon carbide-containing carbide layer has an arithmetical mean surface roughness Ra of 1 $\mu$m or greater

and a Vickers hardness HV of 50 or greater, at least a portion of the silicon carbide-containing carbide layer permeating the carbonaceous substrate, and the silicon carbide-containing carbide layer including a portion in which a permeation depth of the permeating portion is 50 $\mu$m or greater.

**Patentansprüche**

1. Kohlenstoffmaterial, das eine thermische Sprühbeschichtungsschicht aufweist, **dadurch gekennzeichnet, dass** es Folgendes umfasst:
ein kohlenstoffhaltiges Substrat; und eine Siliciumcarbid enthaltende Carbidschicht, die metallisches Silicium enthält, und eine thermische Sprühbeschichtungsschicht, bereitgestellt auf dem kohlenstoffhaltigen Substrat in jener Reihenfolge von dem kohlenstoffhaltigen Substrat aus, und wobei:

   die Siliciumcarbid enthaltende Carbidschicht ein arithmetisches Mittel der Oberflächenrauheit Ra von 1 $\mu$m oder größer und eine Vickershärte HV von 50 oder größer aufweist, mindestens ein Teil der Siliciumcarbid enthaltenden Carbidschicht in das kohlenstoffhaltiges Substrat eindringt und die Siliciumcarbid enthaltende Carbidschicht einen Teil einschließt, in dem eine Eindringtiefe des eindringenden Teils 50 $\mu$m oder größer ist; und die thermische Sprühbeschichtungsschicht eine Substanz umfasst, wobei die Substanz fähig ist, ein Silicid mit Silicium in der Siliciumcarbid enthaltenden Carbidschicht zu bilden, wobei die Substanz metallische Materialien, die fähig sind, ein Silicid mit Silicium in der Siliciumcarbid enthaltenden Carbidschicht zu bilden, Legierungsmaterialien, die mindestens eines von metallischen Elementen der metallischen Materialien enthalten, oder Verbindungen, die mindestens ein Carbid oder Borid der metallischen Elemente enthalten, einschließt; und eine Metallsilicidschicht zwischen der Siliciumcarbid enthaltenden Carbidschicht und der thermischen Sprühbeschichtungsschicht bereitgestellt ist, wobei die Metallsilicidschicht durch eine Reaktion der Substanz mit dem Silicium gebildet wird.

2. Kohlenstoffmaterial, das eine thermische Sprühbeschichtungsschicht aufweist, gemäß Anspruch 1, das weiter eine Deckbeschichtungsschicht umfasst, die auf einer Oberfläche der thermischen Sprühbeschichtungsschicht bereitgestellt ist, wobei die Deckbeschichtungsschicht durch thermisches Sprühen gebildet wird.

3. Herdrolle für einen Heizofen, auf der ein metallisches Material, das in einer oxidierenden Atmosphäre erhitzt wird, läuft, **dadurch gekennzeichnet, dass** ein Rollenkörperteil davon das Kohlenstoffmaterial, das eine thermische Sprühbeschichtungsschicht aufweist, gemäß Anspruch 1 oder 2 umfasst.

4. Verfahren zur Herstellung eines Kohlenstoffmaterials, das eine thermische Sprühbeschichtungsschicht aufweist, **dadurch gekennzeichnet, dass** es die folgenden Schritte umfasst:

   Beschichten eines kohlenstoffhaltigen Substrats mit einer Lösung, in der metallisches Silicium und ein Harz in einem Lösungsmittel dispergiert sind;
   Bewirken, dass das Lösungsmittel in der Lösung verdampft; Bilden einer Siliciumcarbid enthaltenden Carbidschicht, die metallisches Silicium enthält, auf dem kohlenstoffhaltigen Substrat durch Umsetzen des metallischen Siliciums mit dem Kohlenstoff in dem kohlenstoffhaltigen Substrat und dem Kohlenstoff in dem Harz durch eine Wärmebehandlung; und
   Bilden einer thermischen Sprühbeschichtungsschicht auf der Siliciumcarbid enthaltenden Carbidschicht durch thermisches Sprühen einer Substanz, die fähig ist, ein Silicid zu bilden, und Bilden eines Silicids zwischen der thermischen Sprühbeschichtungsschicht und der Siliciumcarbid enthaltenden Carbidschicht durch das thermische Sprühen beim Bilden der thermischen Sprühbeschichtungsschicht, wobei das Silicid aus der Substanz und dem Silicium in der Siliciumcarbid enthaltenden Carbidschicht gebildet wird, wobei die Substanz metallische Materialien, die fähig sind, ein Silicid mit Silicium in der Siliciumcarbid enthaltenden Carbidschicht zu bilden, Legierungsmaterialien, die mindestens eines der metallischen Elemente der metallischen Materialien enthalten, oder Verbindungen, die mindestens ein Carbid oder Borid der metallischen Elemente enthalten, einschließt; und die Siliciumcarbid enthaltende Carbidschicht ein arithmetisches Mittel der Oberflächenrauheit Ra von 1 $\mu$m oder größer und eine Vickershärte HV von 50 oder größer aufweist, mindestens ein Teil der Siliciumcarbid enthaltenden Carbidschicht in das kohlenstoffhaltiges Substrat eindringt und die Siliciumcarbid enthaltende Carbidschicht einen Teil einschließt, in dem eine Eindringtiefe des eindringenden Teils 50 $\mu$m oder größer ist.

**Revendications**

1.  Matériau carboné comportant une couche de revêtement par pulvérisation thermique, **caractérisé en ce qu'**il comprend :

    un substrat carboné ; et une couche de carbure contenant du carbure de silicium qui contient du silicium métallique et une couche de revêtement par pulvérisation thermique, disposées sur le substrat carboné dans cet ordre à partir du substrat carboné, et dans lequel :

    la couche de carbure contenant du carbure de silicium présente une rugosité de surface moyenne arithmétique Ra de 1 $\mu$m ou plus et une dureté Vickers HV de 50 ou plus, au moins une partie de la couche de carbure contenant du carbure de silicium traversant par perméation le substrat carboné, et la couche de carbure contenant du carbure de silicium comprenant une partie dans laquelle une profondeur de perméation de la partie de perméation est de 50 $\mu$m ou plus ; et
    la couche de revêtement par pulvérisation thermique comprend une substance, la substance étant capable de former un siliciure avec du silicium dans la couche de carbure contenant du carbure de silicium ; la substance comprend des matériaux métalliques capables de former un siliciure avec du silicium dans la couche de carbure contenant du carbure de silicium, des matériaux d'alliage contenant au moins l'un des éléments métalliques des matériaux métalliques, ou des composés contenant au moins un carbure ou un borure des éléments métalliques ; et une couche de siliciure métallique est disposée entre la couche de carbure contenant du carbure de silicium et la couche de revêtement par pulvérisation thermique, la couche de siliciure métallique étant formée par une réaction de la substance avec le silicium.

2.  Matériau carboné comportant une couche de revêtement par pulvérisation thermique, selon la revendication 1, comprenant en outre une couche supérieure disposée sur une surface de la couche de revêtement par pulvérisation thermique, la couche de revêtement supérieure étant formée par pulvérisation thermique.

3.  Rouleau de sol pour un four de chauffage, sur lequel un matériau métallique chauffé dans une atmosphère oxydante se déplace, **caractérisé en ce qu'**une partie de corps de rouleau de celui-ci comprend le matériau carboné ayant une couche de revêtement par pulvérisation thermique selon la revendication 1 ou 2.

4.  Procédé de fabrication d'un matériau carboné ayant une couche de revêtement par pulvérisation thermique, **caractérisé en ce qu'**il comprend les étapes de :

    revêtement d'un substrat carboné avec une solution dans laquelle du silicium métallique et une résine sont dispersés dans un solvant ;
    évaporation du solvant dans la solution ;
    formation d'une couche de carbure contenant du carbure de silicium qui contient du silicium métallique sur le substrat carboné en amenant le silicium métallique à réagir avec le carbone dans le substrat carboné et le carbone dans la résine par un traitement thermique ; et
    formation d'une couche de revêtement par pulvérisation thermique sur la couche de carbure contenant du carbure de silicium par pulvérisation thermique d'une substance capable de former un siliciure, et formation d'un siliciure entre la couche de revêtement par pulvérisation thermique et la couche de carbure contenant du carbure de silicium par la pulvérisation thermique dans la formation de la couche de revêtement par pulvérisation thermique, le siliciure étant formé à partir de la substance et du silicium dans la couche de carbure contenant du carbure de silicium, dans lequel la substance comprend des matériaux métalliques capables de former un siliciure avec du silicium dans la couche de carbure contenant du carbure de silicium, des matériaux d'alliage contenant au moins l'un parmi les éléments métalliques des matériaux métalliques, ou des composés contenant au moins un carbure ou borure des éléments métalliques ; et
    la couche de carbure contenant du carbure de silicium présente une rugosité de surface moyenne arithmétique Ra de 1 $\mu$m ou plus et une dureté Vickers HV de 50 ou plus, au moins une partie de la couche de carbure contenant du carbure de silicium traversant par perméation le substrat carboné, et la couche de carbure contenant du carbure de silicium comprenant une partie dans laquelle une profondeur de perméation de la partie de perméation est de 50 $\mu$m ou plus.

FIG. 1

FIG. 2

FIG. 3

FIG. 4

ANALYSIS5

ANALYSIS3

ANALYSIS4

ANALYSIS2

ANALYSIS1

ANALYSIS6

100 μm          Electron Image 1

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H081996012474 A
- JP H051993070268 A